# FASCICULE DE BREVET EUROPEEN

(11) **EP 1 132 645 B1**
(45) Date de publication et mention de la délivrance du brevet: **16.07.2003**
(21) Numéro de dépôt: 01400539.1
(22) Date de dépôt: 01.03.2001
(51) Int. Cl.: F16F 7/108, F01N 7/18

(54) **Dispositif élastique de suspension d'une structure vibrante à une structure rigide**
Elastische Vorrichtung zur Aufhängung einer schwingenden Struktur gegenüber einer steifen Struktur
Elastic device for the suspension of a vibrating structure from a rigid structure

(30) Priorité: 06.03.2000 FR 0002839
(43) Date de publication de la demande: 12.09.2001
(73) Titulaire: HUTCHINSON, 75008 Paris (FR)
(72) Inventeur: Garaud, Patrick, 28200 St-Denis-les-Ponts (FR); Chenais, Gilles, 28200 Marboue (FR); Salembier, Vincent, 28400 Brunelles (FR)
(74) Mandataire: Burbaud, Eric

(56) Documents cités:
- EP-A- 0 411 246
- EP-A- 0 979 930
- FR-A- 2 758 602
- PATENT ABSTRACTS OF JAPAN vol. 1996, no. 05, 31 mai 1996 (1996-05-31) & JP 08 004816 A (KURASHIKI KAKO CO LTD), 12 janvier 1996 (1996-01-12)
- PATENT ABSTRACTS OF JAPAN vol. 1998, no. 03, 27 février 1998 (1998-02-27) & JP 09 296848 A (BRIDGESTONE CORP), 18 novembre 1997 (1997-11-18)

## Description

La présente invention est relative aux dispositifs pour la suspension d'une structure vibrante sur une structure de support rigide, notamment pour la suspension d'une tubulure d'échappement d'un moteur de véhicule sur la caisse de ce dernier.

L'invention concerne plus particulièrement un dispositif pour la suspension d'une structure vibrante sur une structure de support rigide comprenant :
- un élément élastique annulaire qui comprend deux organes de fixation destinés à être reliés respectivement aux deux structures, lesdits organes de fixation étant espacés l'un de l'autre dans une direction dite de vibration et étant reliés entre eux par deux branches en élastomère qui s'étendent sensiblement selon la direction de vibration,
- et au moins une masse battante qui relie l'une à l'autre lesdites branches.

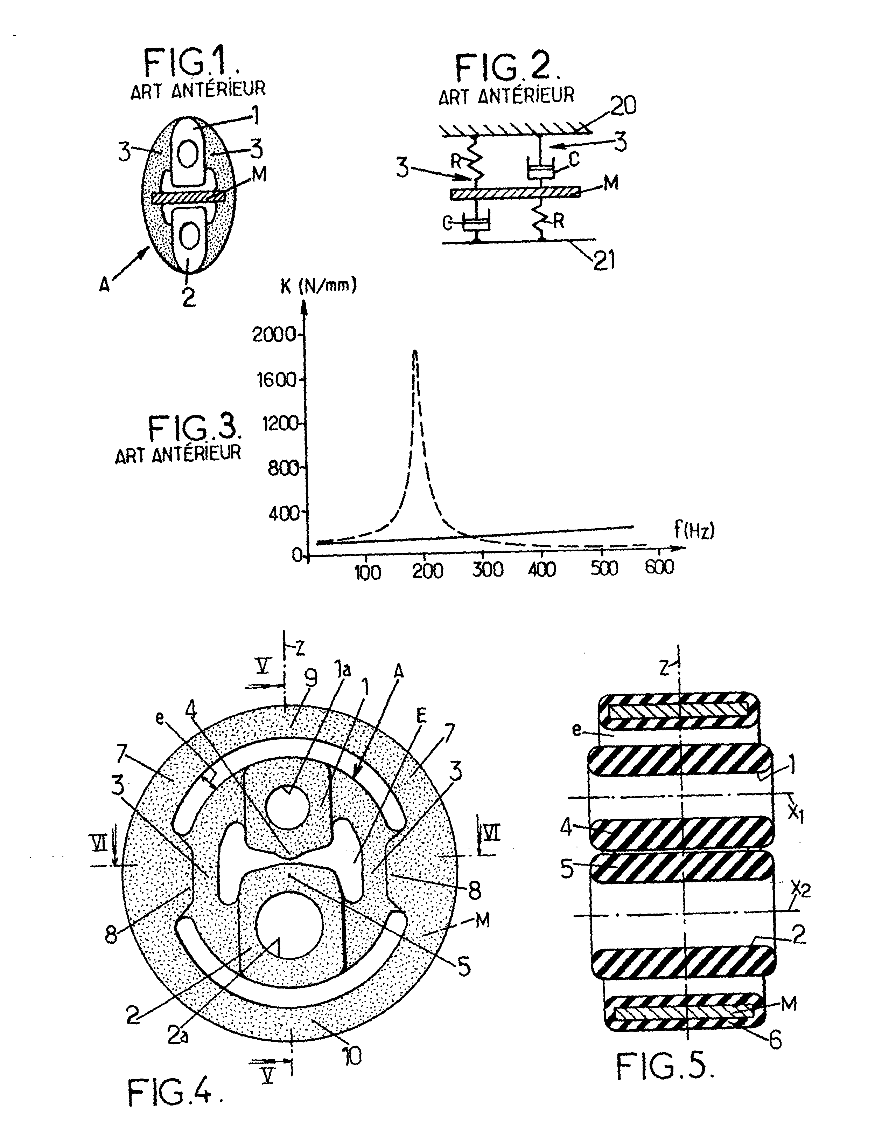

Un dispositif de ce type connu par le document FR-A-2 758 602 est représenté à la figure 1 du dessin ci-annexé, la figure 2 représentant le schéma équivalent théorique de ce dispositif et la figure 3 le diagramme de la raideur obtenue K en fonction de la fréquence f des vibrations s'exerçant entre les organes de fixation 1 et 2 de l'élément élastique A du dispositif, par exemple en caoutchouc. On voit sur la figure 2 que chaque branche en élastomère 3 peut être représentée par un ressort R et un amortisseur C montés en série entre la caisse 20 d'un véhicule automobile et sa tubulure d'échappement 21, la masse battante M étant reliée aux deux branches 3 entre leur ressort R et leur amortisseur C respectifs. L'intérêt de cette technique antérieure est visible sur la figure 3 et réside dans la filtration des vibrations haute fréquence qui peut être obtenue grâce à l'adjonction de la masse battante m.

L'inconvénient de ce dispositif réside essentiellement dans le fait qu'il ne permet pas de limiter, comme dans le document EP-A-0 979 930, les débattements de la structure vibrante par rapport à la structure de support rigide lorsque la structure vibrante est soumise à de très fortes sollicitations en traction, notamment dans la direction verticale. Il en résulte un risque de dégradation du dispositif élastique.

Un autre inconvénient de ce dispositif réside dans la conformation donnée à la masse M et dans sa disposition relative par rapport au dispositif. Comme on peut le voir sur la figure 1, la masse M se présente sous la forme d'une barre rigide dont les deux extrémités opposées sont encastrées respectivement dans les deux branches 3 de l'élément élastique A. De ce fait, les deux branches ne sont plus continues, ce qui a tendance à nuire à la tenue en endurance du dispositif.

La présente invention a notamment pour but de remédier à ces inconvénients.

A cet effet, le dispositif de suspension selon l'invention est caractérisé en ce que la masse battante se présente sous la forme d'un anneau qui est agencé autour de l'élément élastique de façon à présenter deux zones de butée situées respectivement au voisinage des deux organes de fixation pour limiter les débattements en traction de ces derniers.

Les débattements en traction de la structure vibrante par rapport à la structure de support rigide sont ainsi parfaitement limités grâce à la conformation et l'agencement de ladite masse battante, le dispositif restant en outre facile à fabriquer et peu coûteux.

Dans des modes de réalisation préférés du dispositif de suspension selon l'invention, on peut éventuellement avoir recours en outre à l'une et/ou à l'autre des dispositions suivantes :
- l'élément élastique comprend un bloc d'élastomère pourvu d'un évidement définissant d'une part lesdites branches de l'élément élastique, et d'autre part deux zones de butée en compression orientées l'une vers l'autre au niveau des organes de fixation ;
- la masse battante comporte deux tronçons qui longent respectivement les deux branches de l'élément élastique et qui sont pourvus chacun d'une saillie orientée en direction de l'élément élastique, ledit anneau étant relié à l'élément élastique par surmoulage et adhérisation de chacune desdites branches de l'élément élastique sur respectivement chacune desdites saillies;
- la masse battante est métallique ;
- la masse battante est enrobée d'une couche d'élastomère qui est venue de matière avec l'élément élastique ;
- la couche d'élastomère enrobe complètement la masse battante.

D'autres caractéristiques et avantages de l'invention apparaîtront au cours de la description détaillée suivante d'un de ses modes de réalisation, donné à titre d'exemple non limitatif, en regard des dessins joints.

Sur les dessins :
- la figure 4 est une vue en élévation d'un dispositif de suspension conforme à l'invention ;
- la figure 5 est une vue en coupe du dispositif représenté sur la figure 4, la coupe étant prise le long de la ligne V-V de la figure 4 ;
- la figure 6 est une vue en coupe du dispositif représenté sur la figure 4, la coupe étant prise le long de la ligne VI-VI de la figure 4 ;
- la figure 7 est un diagramme montrant l'évolution de la raideur K de ce dispositif en fonction de la fréquence f des vibrations.

Le dispositif représenté sur les figures 4 à 6 comporte un élément élastique A qui est formé d'un corps unique en élastomère comprenant deux blocs 1 et 2 ou autres organes de fixation. Ces blocs sont percés de deux trous 1a et 2a pour le passage d'organes d'accrochage reliés d'une part à la caisse d'un véhicule (non représentée) ou autre structure de support, et, d'autre part à une tubulure d'échappement (non représentée) ou autre élément vibrant. Les trous 1a et 2a sont centrés respectivement sur des axes X1 et X2 sensiblement horizontaux. L'élément A présente un évidement E sensiblement en forme de H, ce qui délimite deux branches latérales élastiques 3 dans l'élastomère, lesdites branches étant sensiblement parallèle et s'étendant selon une direction de vibration Z qui est sensiblement verticale et perpendiculaire aux axes X1 et X2.

Les blocs 1 et 2 forment deux zones de butée en compression 4 et 5 disposées face à face. L'élément A présente ainsi une grande raideur à la compression vis-à-vis des efforts verticaux tendant à rapprocher l'un de l'autre les deux organes d'accrochage, par exemple sous l'effet de chocs, ceci dès que les deux zones 4 et 5 entrent en contact l'une avec l'autre.

Le dispositif des figures 4 à 6 comporte en outre une masse battante M qui se présente sous la forme d'un anneau rigide, par exemple en acier, lequel est agencé autour de l'élément élastique A avec un léger jeu e dans la direction Z. Ce jeu peut être réalisé par exemple sous la forme de deux fentes e en arc de cercle disposées entre chaque bloc 1, 2 de l'élément élastique A et la masse battante M.

Dans l'exemple représenté, l'anneau M a une forme générale sensiblement circulaire. Il est, de préférence, complètement enrobé par une couche d'élastomère 6 qui est venue de matière avec le bloc de l'élément A, ceci afin d'éviter la corrosion et de permettre à l'ensemble d'être moulé d'une pièce. On obtient alors un dispositif de suspension facile à fabriquer et peu coûteux.

L'anneau M comporte deux tronçons 7 diamétralement opposés qui longent respectivement les branches latérales 3 de l'élément A. Dans la région médiane des deux tronçons 7, la couche d'élastomère 6 présente deux bossages 8 dirigés vers l'élément A, chaque bossage étant surmoulé et adhérisé avec la surface externe de la branche latérale 3 qui lui est associée, de préférence dans la région médiane de cette dernière. Les branches latérales 3 de l'élément A conservent ainsi leur continuité, ceci au bénéfice d'une meilleure tenue en endurance du dispositif selon l'invention.

Ledit anneau M comporte en outre deux tronçons 9, 10 diamétralement opposés qui relient les deux tronçons 7 entre eux, le tronçon 9 longeant le bloc 1 de l'élément A, et le tronçon 10 longeant le bloc 2. De manière avantageuse, lesdits tronçons 9, 10 forment respectivement deux zones de butée contre lesquelles sont destinées à venir s'appliquer respectivement les blocs 1, 2 de l'élément A lorsque lesdits blocs sont soumis à des efforts verticaux tendant à les éloigner l'un de l'autre.

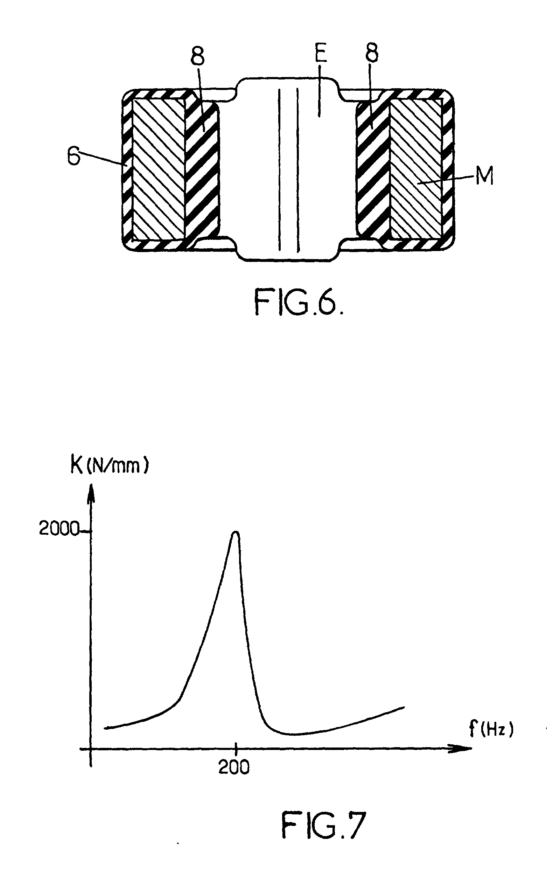

Avec un tel montage, on obtient la réponse en raideur K représentée sur la figure 7, avec les mêmes conventions que précédemment. On voit que grâce à l'invention, la raideur K est faible aux hautes fréquences, ce qui permet une bonne filtration du dispositif à ces fréquences.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention. C'est ainsi que l'anneau M, au lieu d'être enrobé par la couche d'élastomère 6 venue de matière avec le corps de l'élément A, pourra être nu. Dans ce cas, cet anneau pourra être pourvu de deux saillies internes, de préférence diamétralement opposées, par lesquelles il sera relié directement à l'élément A, chaque saillie étant adhérisée avec la surface externe de la branche latérale 3 de l'élément A qui lui est associée, de préférence dans la région médiane de cette dernière.

## Revendications

1. Dispositif pour la suspension d'une structure vibrante sur une structure de support rigide, notamment pour la suspension d'une tubulure d'échappement d'un moteur de véhicule sur la caisse de ce dernier, du type comprenant :
- un élément élastique annulaire (A) qui comprend deux organes de fixation (1, 2) destinés à être reliés respectivement à la structure de support rigide et à la structure vibrante, lesdits organes de fixation étant espacés l'un de l'autre dans une direction (Z) dite de vibration et étant reliés entre eux par deux branches (3) en élastomère de l'élément élastique (A) qui s'étendent sensiblement selon la direction de vibration (Z),
- et au moins une masse battante (M) adaptée pour filtrer des vibrations de haute fréquence, qui relie l'une à l'autre lesdites branches (3),
**caractérisé en ce que** la masse battante (M) se présente sous la forme d'un anneau qui est agencé autour de l'élément élastique (A) de façon à présenter deux zones de butée (9, 10) situées respectivement au voisinage des deux organes de fixation (1, 2) pour limiter les débattements en traction de ces derniers, et comporte deux tronçons (7) qui longent respectivement les deux branches (3) de l'élément élastique (A) et qui sont pourvus chacun d'une saillie (8) orientée en direction de l'élément élastique (A), ledit anneau étant relié à l'élément élastique (A) par surmoulage et adhérisation de chacune desdites branches (3) de l'élément élastique (A) sur respectivement chacune desdites saillies (8).

2. Dispositif selon la revendication 1, dans lequel l'élément élastique comprend un bloc d'élastomère pourvu d'un évidement (E) définissant d'une part lesdites branches (3) de l'élément élastique (A), et d'autre part deux zones de butée en compression (4, 5) orientées l'une vers l'autre au niveau des organes de fixation (1, 2).

3. Dispositif selon l'une quelconque des revendications 1 et 2, dans lequel la masse battante (M) est métallique.

4. Dispositif selon l'une quelconque des revendications 1 à 3, dans lequel la masse battante (M) est enrobée d'une couche d'élastomère (6) qui est venue de matière avec l'élément élastique (A).

5. Dispositif selon la revendication 4, dans lequel la couche d'élastomère (6) enrobe complètement la masse battante (M).

## Patentansprüche

1. Vorrichtung zur Aufhängung einer schwingenden Struktur an einer starren Tragstruktur, insbesondere zur Aufhängung eines Auspuffrohrstutzens eines Motors eines Fahrzeugs an dessen Gehäuse, vom Typ umfassend:
- ein ringförmiges elastisches Element (A), das zwei Befestigungsorgane (1, 2) umfasst, die dazu ausgelegt sind, mit der starren Tragstruktur bzw. mit der schwingenden Struktur verbunden zu sein, wobei die Befestigungsorgane in einer sogenannten Schwingungsrichtung (Z) voneinander beabstandet sind und durch zwei Elastomerarme (3) des elastischen Elements (A) miteinander verbunden sind, die sich im Wesentlichen entlang der Schwingungsrichtung (Z) erstrecken,
- sowie wenigstens eine Schlagmasse (M), die dazu ausgelegt ist, Schwingungen hoher Frequenz auszufiltern, und die die Arme (3) miteinander verbindet,
**dadurch gekennzeichnet, dass** die Schlagmasse (M) die Form eines Rings aufweist, welcher derart um das elastische Element (A) herum gebildet ist, dass er zwei Anschlagbereiche (9, 10) aufweist, die jeweils den zwei Befestigungsorganen (1, 2) benachbart angeordnet sind, um die Zug-Ausschläge dieser letztgenannten zu begrenzen, und der zwei Abschnitte (7) umfasst, die jeweils entlang den zwei Armen (3) des elastischen Elements (A) verlaufen und die jeweils mit einem in der Richtung des elastischen Elements (A) orientierten Vorsprung (8) versehen sind, wobei der Ring durch Gießformen und Aneinanderhaften jedes der Arme (3) des elastischen Elements (A) jeweils an jedem der Vorsprünge (8) mit dem elastischen Element (A) verbunden ist.

2. Vorrichtung nach Anspruch 1, bei der das elastische Element einen Elastomerblock umfasst, der mit einer Aussparung (E) versehen ist, die einerseits die Arme (3) des elastischen Elements (A) und andererseits zwei Kompressions-Anschlagbereiche (4, 5) definiert, die zueinander hin orientiert sind, und zwar im Bereich der Befestigungsorgane (1, 2).

3. Vorrichtung nach einem der Ansprüche 1 bis 2, bei der die Schlagmasse (M) aus Metall ist.

4. Vorrichtung nach einem der Ansprüche 1 bis 3, bei der die Schlagmasse (M) mit einer Elastomerschicht (6) umhüllt ist, die einstückig mit dem elastischen Element (A) ist.

5. Vorrichtung nach Anspruch 4, bei der die Elastomerschicht (6) vollständig die Schlagmasse (M) umhüllt.

## Claims

1. A device for suspending a vibrating structure on a rigid support structure, in particular for suspending an exhaust pipe of a motor vehicle on the body of the latter, of the type comprising:
- an annular elastic element (A) having two fixing members (1,2) designed to be linked respectively to the rigid support structure and to the vibrating structure; said fixing members being spaced apart from one another in a vibration direction (Z) and being linked to one another by two elastomer branches (3) extending substantially in the vibration direction (Z),
- and at least one vibrating mass (M) designed to filter high frequency vibrations, linking said branches (3) to one another,
**characterized in that** the vibrating mass (M) is provided in the form of a ring which encloses the elastic element (A) so as to form two stop zones (9,10) located respectively in the vicinity of the two fixing members (1,2) in order to limit displacements of the latter under traction, and has two sections (7) which run respectively alongside the two branches of the elastic element (A), each being provided with a projection (8) oriented in the direction of the elastic element (A), said ring being linked to the elastic element (A) by overmoulding and each of said branches (3) of the elastic element (A) being adhered respectively to each of said projections (8).

2. A device according to claim 1, in which the elastic element has an elastomer block provided with a recess (E) defining said branches (3) of the elastic element (A) on the one hand, and two compression stop zones (4,5) directed towards one another on the level of the fixing members (1,2).

3. A device according to any one of claims 1 and 2, in which the vibrating mass (M) is metallic.

4. A device according to any one of claims 1 to 3, in which the vibrating mass (M) is encased in an elastomer layer (6) which is made in a single piece with and from the material of the elastic element (A).

5. A device according to claim 4, in which the elastomer layer (6) completely encases the vibrating mass (M).
